# EUROPÄISCHE PATENTSCHRIFT

(11) **EP 0 563 105 B1**
(45) Veröffentlichungstag und Bekanntmachung des Hinweises auf die Patenterteilung: **11.05.1994**
(21) Anmeldenummer: 92900816.7
(22) Anmeldetag: 18.12.1991
(51) Int. Cl.: G01N 29/04

(54) **GANZKÖRPER-PRÜFANLAGE MIT EINEM INSBESONDERE ALS ROTOR AUSGEBILDETEN PRÜFKOPFTRÄGER, DER AUF EINEM HÖHENVERSTELLBAREN AUFNAHMETISCH ANGEORDNET IST, UND MIT EINEM TESTSTÜCKMANIPULATOR**
WHOLE-PRODUCT ULTRASONIC INSPECTION SYSTEM WITH A TEST-HEAD MOUNT, IN PARTICULAR A MOUNT DESIGNED AS A ROTATING BODY, MOUNTED ON A HEIGHT-ADJUSTABLE TEST BENCH, THE SYSTEM ALSO INCLUDING A TEST-PIECE MANIPULATOR
INSTALLATION DE CONTROLE GLOBAL COMPORTANT UN PORTE-PALPEUR, NOTAMMENT SOUS LA FORME D'UN ROTOR, AGENCE SUR UNE TABLE RECEPTRICE REGLABLE EN HAUTEUR, ET UN MANIPULATEUR D'EPROUVETTE

(30) Priorität: 20.12.1990 DE 4040870
(43) Veröffentlichungstag der Anmeldung: 06.10.1993
(73) Patentinhaber: KRAUTKRÄMER GmbH & Co., D-50354 Hürth (DE)
(72) Erfinder: PRAUSE, Reinhard, D-5205 St Augustin (DE); PATZKE, Ottokar, D-5042 Erftstadt-Lieblar (DE); PAWELLETZ, Reinhard, D-4000 Düsseldorf 22 (DE); KARBACH, Bernhard, D-5042 Erftstadt-Friesheim (DE)
(74) Vertreter: Bauer, Wulf, Dr.
(86) Internationale Anmeldenummer: DE9100989
(87) Internationale Veröffentlichungsnummer: WO9211533

(56) Entgegenhaltungen:
- US-A- 4 660 419
- US-A- 4 744 251

## Beschreibung

Die Erfindung bezieht sich auf eine Ultraschall-Ganzkörper-Prüfanlage mit einem insbesondere als Rotor ausgebildeten Prüfkopfträger, der auf einem höhenverstellbaren Aufnahmetisch angeordnet ist, und mit einem Teststückmanipulator. Eine solche Prüfanlage ist aus US-A- 4 660 419 bekannt.

Als "Ganzkörper-Prüfanlagen" werden Ultraschallprüfanlagen bezeichnet, die für die Prüfung von Rohren, Stangen oder anderem Material mit regelmäßigem Polygonprofil geeignet sind und bei denen das Prüfstück entlang einer schraubenlinienförmigen Bahn mit Ultraschall abgetastet wird. Das Prüfstück wird dabei in Richtung seiner Längsachse gegenüber dem Prüfkopfträger bewegt. Entweder wird das Prüfstück zusätzlich dabei selbst um seine Längsachse gedreht und bleibt der Prüfkopfträger fest, oder der Prüfkopfträger ist als Rotor ausgebildet, der sich um die Achse des Prüfstücks dreht. Derartige Prüfanlagen sind beispielsweise in J. und H. Krautkrämer "Werkstoffprüfung mit Ultraschall", 4. Aufl., Seiten 442 bis 461 beschrieben.

Mittels eines Teststückmanipulators werden Teststücke (Eichnormale) präzise in der Ganzkörper-Prüfanlage positioniert. Teststücke mit dem dazugehörigen Teststückmanipulator sind Einstellnormale von Ultraschall-Prüfanlagen der hier in Rede stehenden Art, mit ihnen wird die Prüfmechanik und -elektronik eingestellt. Die Teststücke haben üblicherweise und je nach Prüfaufgabe mehrere Arten Fehler. Diese sind an unterschiedlichen Positionen auf dem Umfang und über die Länge des Teststücks verteilt bewußt eingearbeitet. Um alle derartigen Fehler (Normfehler) erfassen zu können, muß das Teststück mittels des Manipulators einerseits in seiner Längsachse gegenüber dem Prüfkopfträger in jede Position gefahren werden können. Andererseits muß es um seine Längsachse drehbar sein sowie gegebenenfalls Oszillationsbewegungen ausführen können.

Durch Normen, teilweise auch durch Lieferverträge, ist vorgeschrieben, in welchen Abständen eine Ganzkörper-Prüfanlage einzustellen ist, um vorgegebene Produktionsqualitäten einhalten zu können. Die Einstellung und Überprüfung ist notwendig, weil sich während des Betriebes Abweichungen einstellen können, beispielsweise verschmutzen die Prüfköpfe oder nutzen sich ab. Um nun bei gleichen Fehlern die jeweils auch entsprechend gleiche elektrische Anzeige zu erhalten, erfolgt die Einstellung mittels des zugehörigen Teststücks auf vorgegebene Werte, beispielsweise wird die Verstärkung nachgestellt.

Eine derartige Überprüfung und Justierung einer Ganzkörper-Prüfanlage bedeutet stets einen Ausfall in der Produktion. Es wird daher angestrebt, daß die Einstell- und Überprüfungszeiten so kurz wie möglich sind. Hierfür ist ein schneller Teststückwechsel, der möglichst automatisierbar ist, anzustreben.

Beim praktischen Ablauf einer Einstellung einer Ganzkörper-Prüfanlage wird der Prüfkopfträger im allgemeinen aus einer Serviceposition in die Testposition verfahren, dies geschieht zumeist horizontal. In dieser Position wird nun mittels des Prüfstückmanipulators ein Teststück an den Prüfkopfträger herangefahren und bewegt.

Die Einstellung einer Prüfanlage mit dem bekannten Teststückmanipulator und den zuhörigen Teststücken erfordert relativ viel Zeit. Es muß jeweils ein Teststück eingespannt werden, der Teststückmanipulator für die jeweilige Prüfaufgabe achsgleich mit dem Prüfkopfträger ausgerichtet werden und es müssen die Relativbewegungen durchgeführt werden.

Hiervon ausgehend liegt der Erfindung die Aufgabe zugrunde, eine Prüfanlage der hier in Rede stehenden Art mit einem Teststücktanipulator so weiterzubilden, daß die Einstellung und Überprüfung weitgehend mechanisiert erfolgen kann.

Gelöst wird diese Aufgabe durch die Merkmale des Patentanspruchs 1 bzw. 2. Eine spezielle Verwendung der Prüfanlage wird in Anspruch 9 beschrieben.

Erfindungsgemäß sind also Teststückmanipulator und Prüfkopfträger auf dem höhenverstellbaren Aufnahmetisch angeordnet sind. Eine separate Höhenjustierung entfällt dadurch. Weiterhin wird das Einbringen des Prüfkopfträgers in die Bahn des Teststückmanipulators oder umgekehrt das Einbringen des Teststückmanipulators in die Prüflinie, das ist die Achse eines Prüfstücks im Prüfkopfträgers, dadurch vereinfacht und präzise vorgebbar, daß in der Lösung gemäß Patentanspruch 1 entweder der Teststückmanipulator oder der Prüfkopfträger mittels einer Längsführung am Aufnahmetisch angeordnet ist, so daß eine Verschiebung quer zur Achse von Teststückmanipulator bzw. Prüfstück erfolgen kann. In der Lösung nach Patentanspruch 2 ist der Teststückmanipulator an einem Schwenkarm angeordnet, der seinerseits am höhenverstellbaren Aufnahmetisch angelenkt ist. In einer Schwenkstellung fallen die Achse des Teststückmanipulators und die Prüflinie zusammen. In der anderen Schwenkstellung befindet sich der Teststückmanipulator in der Ruhe- und Serviceposition.

Die Erfindung ermöglicht also ein schnelles Ausrichten der Achsen des Teststückmanipulators und des Prüfkopfträgers, dieses Ausrichten kann maschinell erfolgen, läßt sich also beispielsweise durch einen Rechner gesteuert in gewissen Zeitabständen automatisch durchführen. In jedem Fall verkürzen sich die Zeiten, die für das Vorbereiten der eigentlichen Überprüfung notwendig sind. Der Teststückmanipulator muß nicht noch in irgendeiner Form ausgerichtet werden, vielmehr kann ein Teststück, das sich am Teststückmanipulator befindet, ohne weitere Justierungsmaßnahmen in den Prüfkopfträger, der beispielsweise ein Rotor ist, geschoben werden. Einziges Kriterium, das bei einer derartigen Anordnung noch die einzelnen Teststücke voneinander unterscheidet, ist dann der Durchmesser der Teststücke. Anders ausgedrückt muß beispielsweise ein Prüfkopfträger für Segment-Tauchtechnik so angestellt werden, daß das Teststück erfaßt wird oder es müssen bei einem Prüfkopfträger in Form eines Rotors die Dichtringe entsprechend ausgebildet werden, damit das Teststück eingefahren werden kann und ausreichend abgedichtet wird.

Dies ermöglicht folgende, für sich erfinderische Durchführung der Einstellung von Ganzkörper-Prüfanlagen: In Abkehr von der bisherigen Übung, bei der das Teststück konturgleich mit den Prüfstücken, also den zu testenden Rohren, Stangen oder dergleichen ist, genügt es, Teststücke in abgestuften Durchmessern vorrätig zu halten, z. B. 20 mm, 25 mm, 30 mm usw., und für zwischenliegende Werte zu prüfender Produktion nach einer vorgegebenen Tabelle zu extrapolieren. So kann beispielsweise ein Rohr mit 72 mm Außendurchmesser aus der Produktion getestet werden, indem ein Teststück mit 70 mm Außendurchmesser benutzt wird und die Anpassung durch Extrapolation gefunden wird. Die Extrapolation ist durch die Daten zuvor erfolgter Vergleichsmessungen von Rohren beispielsweise mit dem Durchmesser 80 mm und 70 mm möglich. Hierdurch wird das Lager für Teststücke erheblich reduziert und damit auch der mechanische Ablauf vereinfacht.

Die Längsführung nach der Lehre des Patentanspruchs 1 kann beliebig ausgebildet sein. Sie kann beispielsweise durch Schienen realisiert sein, die waagerecht angeordnet sind und auf denen der Manipulator gegenüber dem (am Aufnahmetisch ortsfesten) Prüfkopfträger verschiebbar angeordnet ist. In einer anderen Ausführung kann der Manipulator an einer vertikalen Hubvorrichtung befestigt sein, die eine vertikal verlaufende Längsführung bildet. In beiden Fällen kann in einer geänderten Ausführung auch der Teststückmanipulator fest mit dem Aufnahmetisch verbunden sein und der Prüfkopfträger auf Schienen bzw. an der Hubvorrichtung befestigt und gegenüber dem Teststückmanipulator verfahrbar angeordnet sein.

Als sehr vorteilhaft hat es sich erwiesen, den Teststückmanipulator über eine zweite, axiale Längsführung am Hubtisch zu befestigen. Mit dieser zusätzlichen Längsführung kann der Teststückmanipulator auf einer Parallelen zur Axialrichtung des Prüfstücks bewegt werden. In der Testposition ist es auf diese Weise möglich, das Teststück axial gegenüber dem Prüfkopfträger hin- und herzubewegen, also das Teststück in den Prüfkopfträger einzufahren und aus ihm herauszufahren.

Weitere Merkmale und Vorzüge der Erfindung ergeben sich aus den übrigen Ansprüchen sowie der nun folgenden Beschreibung eines nicht einschränkend zu verstehenden Ausführungsbeispiels, das unter Bezugnahme auf die Zeichnung näher erläutert wird. In dieser zeigen:
- Fig. 1: eine Seitenansicht einer Prüfanlage der hier in Rede stehenden Art mit einem als Rotor ausgebildeten Prüfkopfträger, gezeigt ist die Serviceposition, ein Teststück und ein Teststückmanipulator sind ersichtlich und
- Fig. 2: eine Darstellung der Prüfanlage gemäß Fig. 1 bei axialer Blickrichtung.

Die Figuren zeigen eine Ganzkörper-Prüfanlage mit einem Rotor 20. Dieser befindet sich auf einem höhenverstellbaren Aufnahmetisch 22, dessen Oberfläche mit 24 bezeichnet ist, sie ist waagerecht und eben. Der Rotor 20 wird durch hier nicht dargestellte Einrichtungen um eine Rotorachse 26 gedreht, diese Achse fällt zusammen mit der Prüflinie der Ganzkörper-Prüfanlage bzw. der Achse eines Prüfstücks 28.

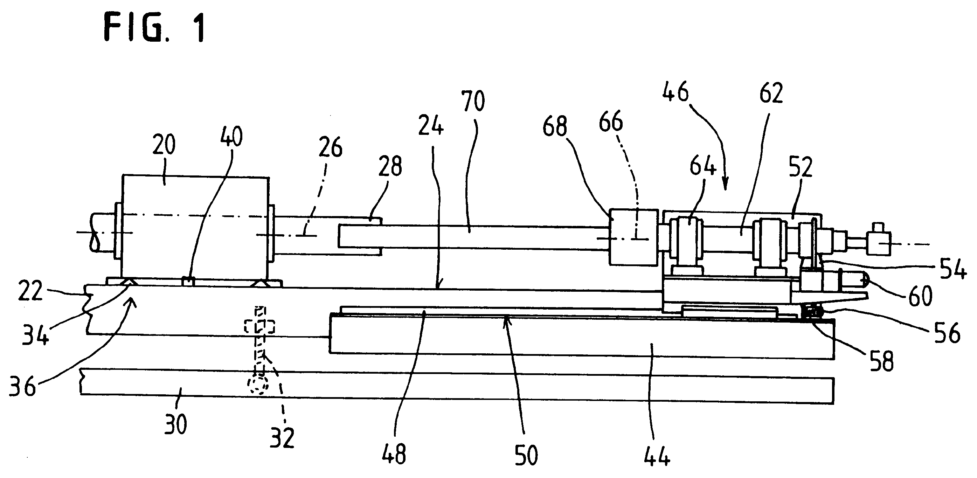

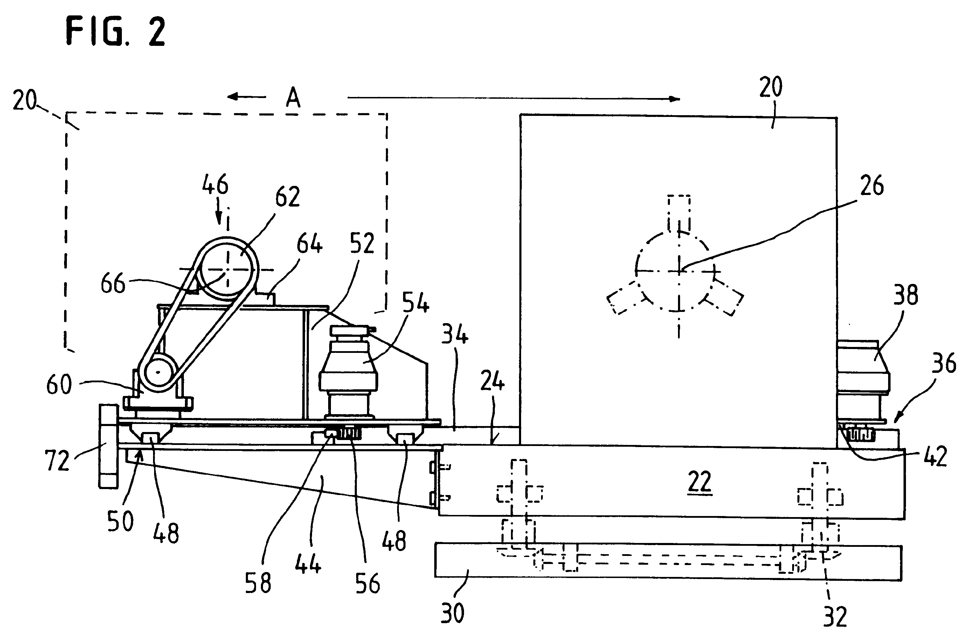

Der Aufnahmetisch 22 ist seinerseits an einem Grundrahmen 30 abgestützt und kann über eine Hubverstelleinrichtung 32 motorisch auf- und abbewegt werden. In der konkreten Ausbildung hat die Hubverstelleinrichtung 32 mehrere motorisch angetriebene Spindeln, von denen in
Fig. 1 eine dargestellt ist. Sie sind, wie Fig. 2 zeigt, untereinander drehverbunden.

Der Rotor 20 ist auf Schienen 34 angeordnet, die eine erste Längsführung 36 bilden. Die Schienen 34 sind als Präzisionsschienen ausgebildet und unmittelbar auf der Oberfläche 24 des Aufnahmetischs 22 befestigt. Sie verlaufen rechtwinklig zur Rotorachse 26 (Prüflinie). Sie sind so ausgebildet, daß der Rotor 20 zwischen der mit ausgezogenen Strichen dargestellten Testposition (Fig. 2) und der gestrichelt angedeuteten Service- und Einstellposition quer zur Ebene der Fig. 1 verfahren werden kann. Für die Hin- und Herbewegung des Rotors 20 auf den Schienen 34 ist ein Getriebemotor 38 vorgesehen der ein Ritzel antreibt, das mit einer parallel zu den Schienen 34 verlaufenden Zahnstange in Eingriff steht. Der ersten Längsführung 36 sind einstellbare Anschläge 40, 42 für die Testposition bzw. die Service- und Einstellposition zugeordnet. Durch sie wird sichergestellt, daß der Rotor 20 jeweils die korrekte Position einnimmt.

Am Aufnahmetisch 22 ist eine Konsole 44 angeflanscht, deren Oberfläche in der Ebene der Oberfläche 24 liegt. Diese Konsole 44 trägt einen Teststückmanipulator 46. Hierzu sind auf der Konsole 44 Schienen 48 befestigt, die parallel zur Rotorachse 26 (Prüflinie) verlaufen und eine zweite Längsführung 50 bilden. Auf ihnen ist ein Schlitten 52 motorisch verfahrbar, der seinerseits den Teststückmanipulator 46 aufnimmt. Für die Bewegung des Schlittens 52 in der zweiten Längsführung 50 ist ein motorischer Antrieb vorgesehen, der dem bereits besprochenen Motorantrieb des Rotors 20 auf der ersten Längsführung 36 entspricht: Am Schlitten 52 ist ein Servogetriebemotor 54 befestigt, der ein Ritzel 56 treibt, das wiederum in Eingriff mit einer Zahnstange 58 steht, die parallel zu den Schienen 48 verläuft.

In den Figuren 1 und 2 ist noch ein Rotationsantrieb des Teststückmanipulators 46 gezeigt. Hierfür ist ein Getriebemotor 60 vorgesehen, der mittels einer Zahnkette einen Körper 62 des Teststückmanipulators 46 in Umdrehungen mit geringer Umdrehungszahl pro Minute, beispielsweise ein bis zwei Umdrehungen pro Minute, versetzt. Der Körper 62 des Teststückmanipulators wird von zwei axial versetzen Rollenlagerböcken 64 umgriffen, die die beschriebene Drehung des Körpers 62 um eine Rotationsachse 66, auch Achse des Teststückmanipulators 46 genannt, zulassen. Schließlich hat der Teststückmanipulator 46 ein Spannfutter 68, in das, wie Fig. 1 zeigt, ein Teststück 70 eingesetzt ist.

Wie die Figuren zeigen, befinden sich die Rotorachse 26 und die Rotationsachse 66 in gleicher Höhe über der Oberfläche 24. Der Rotor 20 muß um die Strecke A verschoben werden, um aus der Testposition in die Service- und Einstellposition und umgekehrt zu gelangen.

Aus den Figuren ist noch eine Kabelschleppe 72 ersichtlich, über sie wird der Schlitten 52 mit elektrischer Energie und gegebenenfalls Druckluft versorgt, weiterhin befinden sich in der Kabelschleppe 72 Steuerleitungen.

Die gezeigte Ausführung nach den Figuren 1 und 2 kann in vielfacher Weise abgewandelt werden. So kann beispielsweise der Teststückmanipulator 46 nicht, wie gezeigt, neben dem Rotor 20 angeordnet werden, sondern axial versetzt oberhalb des Rotors 20. In diesem Fall kann entweder der Rotor 20 mittels der ersten Längsführung höhenverstellbar angeordnet sein, so daß seine Achse in die Prüflinie und in die Rotationsachse 66 des Teststückmanipulators eingefahren werden kann. Andererseits kann auch der Rotor ortsfest am Aufnahmetisch 22 befestigt sein und die erste Längsführung eine Hubbewegung der gesamten Konsole 44 gegenüber dem Aufnahmetisch 22 ermöglichen. In diesem Fall kann die erste Längsführung, entlang der die genannte Hubbewegung stattfindet, in Form von Schraubspindeln Hydraulikzylindern oder dergleichen ausgeführt sein, die parallel zueinander und rechtwinklig zur Oberfläche 24 des Aufnahmetischs 22 an diesem angeordnet sind.

## Patentansprüche

1. Ultraschall-Ganzkörper-Prüfanlage mit einem insbesondere als Rotor (20) ausgebildeten Prüfkopfträger, der auf einem höhenverstellbaren Aufnahmetisch (22) angeordnet ist, und mit einem Teststückmanipulator (46),
dadurch gekennzeichnet, daß auch der Teststückmanipulator (46) auf dem höhenverstellbaren Aufnahmetisch (22) angeordnet ist, daß die Achsen (66, 26) von Teststückmanipulator (46) und einem Prüfstück (28) im Prüfkopfträger (Prüflinie) parallel zueinander verlaufen, und daß eine Längsführung (36) zwischen dem Aufnahmetisch (22) und entweder dem Teststückmanipulator (46) oder dem Prüfkopfträger vorgesehen ist, die quer zur Achse (66) des Teststückmanipulators (46) und der Achse (26) eines Prüfstücks (28) im Prüfkopfträger verläuft und so bemessen ist, daß der Teststückmanipulator (46) relativ zum Prüfkopfträger zwischen einer Testposition, in der die Achsen (66) von Teststückmanipulator (46) und einem Prüfstück (28) im Prüfkopfträger zusammenfallen und einer Serviceposition, in der der Teststückmanipulator (46) einen Durchlauf von Prüfstücken (28) am Prüfkopfträger nicht behindert, verschiebbar ist.

2. Ultraschall-Ganzkörper-Prüfanlage mit einem vorzugsweise als Rotor (20) ausgebildeten Prüfkopfträger, der auf einem höhenverstellbaren Aufnahmetisch (22) angeordnet ist, und mit einem Teststückmanipulator (46),
dadurch gekennzeichnet, daß auch der Teststückmanipulator (46) auf dem höhenverstellbaren Aufnahmetisch (22) angeordnet ist, wobei der Teststückmanipulator (46) an einem Arm befestigt ist, der um eine Schwenkachse schwenkbar angeordnet ist, die
a) parallel zur Achse (26) eines Prüfstücks (28) im Prüfkopfträger (Prüflinie) verläuft,
b) im gleichen Abstand von der Achse (66) des Teststückmanipulators (46) und der Achse (26) eines Prüfstücks (28) im Prüfkopfträger angeordnet ist und
c) am höhenverstellbaren Aufnahmetisch (22) befestigt ist, so daß der Teststückmanipulator (46) gegenüber dem Prüfkopfträger verschwenkbar ist zwischen einer Testposition, in der die Achsen (66, 26) von Teststückmanipulator (46) und einem Prüfstück (28) im Prüfkopfträger zusammenfallen und einer Serviceposition, in der der Teststückmanipulator einen Durchlauf der Prüfstücke (28) am Prüfkopfträger nicht behindert.

3. Ultraschall-Ganzkörper-Prüfanlage nach Anspruch 1, dadurch gekennzeichnet, daß die Längsführung (36) Schienen (34) aufweist, die in einer horizontalen Ebene verlaufen.

4. Ultraschall-Ganzkörper-Prüfanlage nach Anspruch 1, dadurch gekennzeichnet, daß die Längsführung (36) rechtwinklig zu einer Oberfläche (24) des Aufnahmetischs (22) verläuft.

5. Ultraschall-Ganzkörper-Prüfanlage nach Anspruch 1 oder 2, dadurch gekennzeichnet, daß einstellbare Anschläge (40, 42) z. B. an den Schienen (34), am Arm oder am Aufnahmetisch (22) vorgesehen sind, an denen der Teststückmanipulator (46) oder der Prüfkopfträger anliegt.

6. Ultraschall-Ganzkörper-Prüfanlage nach Anspruch 1 oder 2, dadurch gekennzeichnet, daß der Aufnahmetisch (22) an einem Grundrahmen (30) befestigt ist und daß eine Hubverstelleinrichtung (32) vorgesehen ist, durch die der Aufnahmetisch (22) vertikal gegenüber dem Grundrahmen (30) höhenverstellbar ist.

7. Ultraschall-Ganzkörper-Prüfanlage nach Anspruch 1 oder 2, dadurch gekennzeichnet, daß eine zweite Längsführung (50) vorgesehen ist, deren Führungsrichtung parallel zur Rotationsachse (66) des Teststückmanipulators (46) bzw. der Prüflinie verläuft.

8. Ultraschall-Ganzkörper-Prüfanlage nach Anspruch 1 oder 2, dadurch gekennzeichnet, daß der Teststückmanipulator (46) einen Drehantrieb (Getriebemotor 60) aufweist, der eine Drehung des Teststücks (70) um die Rotationsachse (66) des Teststückmanipulators (46) ermöglicht.

9. Verwendung einer Ultraschall-Ganzkörper-Prüfanlage nach einem der Ansprüche 1 bis 8, zur Prüfung von Prüfstücken wobei das Teststück (70) nicht notwendigerweise konturengleich mit dem Prüfstück (28) ist und ein Durchmesserunterschied zwischen Prüfstück (28) und Teststück (70) durch Extrapolation der Werte zweier Teststücke unterschiedlicher Außendurchmesser erhalten wird.

## Claims

1. Ultrasonic whole-body test system with a test probe mount designed especially as a rotor (20) which is mounted on a certically adjustable support platform (22) and has test-piece manipulator (46) characterized by the fact that the test-piece manipulator (46), too, is mounted on the vertically adjustable support platform (22), that the axes (66, 26) of the test-piece manipulator (46) and a piece (28) being tested run parallel to one another in the test probe mount (testing line) and that a longitudinal guide (36) between the support platform (22) and either the test-piece manipulator (46) or the test probe mount is provided which runs transversely to the axis (66) of the test-piece manipulator (46) and the axis (26) of the piece (28) being tested in the test probe mount and has dimensions such that the test-piece manipulator (46) can move relative to the test probe mount between a test position in which the axes (66) of the test-piece manipulator (46) and a piece (28) being tested in the test probe mount coincide and a service position in which the test-piece manipulator (46) does not prevent the piece (28) being tested from being moved onto the test probe mount.

2. Ultrasonic thole-body test system with a test probe mount designed preferably as a rotor (20) which is mounted on a vertically adjustable support platform (22) and has a test-piece manipulator (46), characterized by the fact that the test-piece manipulator (46) is also mounted on the vertically adjustable support platform (22), with the test-piece manipulator (46) attached to an arm which is mounted so as to swivel about a swivelling axis which
a) runs parallel to the axis (26) of the piece (28) being tested in the test probe mount (testing line),
b) is located at the same distance from the axis (66) of the test-piece manipulator (46) and the axis (26) of the piece (28) being tested in the test probe mount, and
c) is mounted on the vertically adjustable support platform (22) so that the test-piece manipulator (46) can be swiveled relative to the test probe mount between a test position in which the axes (66, 26) of the test-piece manipulator (46) and a piece (28) being tested with the test probe mount coincide and a service position in which the test-piece manipulator does not prevent the piece (28) being tested from being moved onto the test probe mount.

3. Ultrasonic whole-body test system in accordance with Claim 1, characterized by the fact that the longitudinal guide (36) has rails (34) running in a horizontal plane.

4. Ultrasonic whole-body test system in accordance with Claim 1, characterized by the fact that the longitudinal guide (36) runs at right angles to a surface (24) of the support platform (22).

5. Ultrasonic whole-body test system in accordance with Claim 1 or 2, characterized by the fact that adjustable stops (40, 42), e.g. on the rails (34), on the arm or on the support platform (22) are provided on which the test-piece manipulator (46) or the test probe mount rests.

6. Ultrasonic whole-body test system in accordance with Claim 1 or 2, characterized by the fact that the support platform (22) is attached to a base frame (30) and that a lifting and moving device (32) is provided by means of which the support platform (22) is made vertically adjustable in relation to the base frame (30).

7. Ultrasonic whole-body test system in accordance with Claim 1 or 2, characterized by the fact that a second longitudinal guide (50) is provided whose guiding direction runs parallel to the axis of rotation (66) of the test-piece manipulator (46) or the testing line.

8. Ultrasonic whole-body test system in accordance with Claim 1 or 2, characterized by the fact that the test-piece manipulator (46) has a rotary drive mechanism (drive motor 60) which permits rotation of the test piece (70) about the axis of rotation (66) of the test-piece manipulator (46).

9. Use of an ultrasonic whole-body test system in accordance with Claims 1 through 8 for testing articles wherein the test piece (70) is not necessarily of the same contour as the piece (28) being tested and a diameter difference between the piece (28) to be tested and the standard test piece (70) is found by extrapolation of the values of two standard test pieces of different outside diameters.

## Revendications

1. Installation de contrôle global comportant un porte- palpeur, notamment sous la forme d'un rotor (20), agencé sur une table réceptrice (22) réglable en hauteur, et un manipulateur d'éprouvette (46), caractérisée en ce que le manipulateur d'éprouvette (46) également est agencé sur la table réceptrice (22) réglable en hauteur, en ce que les axes (66, 26) du manipulateur d'éprouvette (46) et d'un échantillon (28) dans le porte-palpeur (ligne de contrôle) sont parallèles l'un par rapport à l'autre et en ce qu'est prévu entre la table réceptrice (22) et soit le manipulateur d'éprouvette (46) soit le porte-palpeur un guide longitudinal (36) transversal par rapport à l'axe (66) du manipulateur d'éprouvette (46) et à l'axe (26) d'un échantillon (28) dans le porte-palpeur et dimensionné de telle façon que le manipulateur d'éprouvette (46) soit déplaçable relativement vers le porte-palpeur entre une position-test, dans laquelle les axes (66) du manipulateur d'éprouvette (46) et d'un échantillon (28) coïncident dans le porte-palpeur, et une position-service, dans laquelle le manipulateur d'éprouvette (46) n'entrave pas le passage d'échantillons (28) au porte-palpeur.

2. Installation de contrôle global comportant un porte- palpeur, de préférence sous la forme d'un rotor (20), agencé sur une table réceptrice (22) réglable en hauteur, et un manipulateur d'éprouvette (46), caractérisée en ce que le manipulateur d'éprouvette (46) également est agencé sur la table réceptrice (22) réglable en hauteur, le manipulateur d'éprouvette (46) étant fixé à un bras placé de façon orientable autour d'un axe de pivotement qui
a) est parallèle à l'axe (26) d'un échantillon (28) dans le porte-palpeur (ligne de contrôle),
b) est placé à égale distance de l'axe (66) du manipulateur d'éprouvette (46) et de l'axe (26) d'un échantillon (28) dans le porte-palpeur et
c) est fixé à la table réceptrice (22) réglable en hauteur de telle façon que le manipulateur d'éprouvette (46) soit pivotable par rapport au porte-palpeur entre une position-test, dans laquelle les axes (66, 26) du manipulateur d'éprouvette (46) et d'un échantillon (28) coïncident dans le porte-palpeur, et une position-service, dans laquelle le manipulateur d'éprouvette (46) n'entrave pas un passage des échantillons (28) au porte-palpeur.

3. Installation de contrôle global selon la revendication 1 caractérisée en ce que le guide longitudinal (36) présente des rails (34) passant à un niveau horizontal.

4. Installation de contrôle global selon la revendication 1 caractérisée en ce que le guide longitudinal (36) est perpendiculaire à une surface (24) de la table réceptrice (22).

5. Installation de contrôle global selon l'une des revendications 1 ou 2 caractérisée en ce que sont prévues p. ex. aux rails (34), au bras ou à la table réceptrice (22) des butées réglables (40, 42) auxquelles est situé le manipulateur d'éprouvette (46) ou le porte-palpeur.

6. Installation de contrôle global selon l'une des revendications 1 ou 2 caractérisée en ce que la table réceptrice (22) est fixée à un cadre de base (30) et en ce qu'un dispositif de réglage de course (32) est prévu permettant le réglage en hauteur de la table réceptrice (22) par rapport au cadre de base (30).

7. Installation de contrôle global selon l'une des revendications 1 ou 2 caractérisée en ce qu'est prévu un deuxième guide longitudinal (50) dont la direction de guidage est parallèle à l'axe de rotation (66) du manipulateur d'éprouvette (46) voire de la ligne de contrôle.

8. Installation de contrôle global selon l'une des revendications 1 ou 2 caractérisée en ce que le manipulateur d'éprouvette (46) présente un entraînement rotatif (moteur à engrenage 60) permettant une rotation de l'éprouvette (70) autour de l'axe de rotation (66) du manipulateur d'éprouvette (46).

9. Utilisation d'une installation de contrôle global selon l'une des revendications 1 à 8 pour l'examen d'échantillons, l'éprouvette (70) n'ayant pas nécessairement les mêmes contours que l'échantillon (28) et une différence de diamètre entre l'échantillon (28) et l'éprouvette (70) étant obtenue par extrapolation des valeurs de deux échantillons de diamètre extérieur différents.
